# EUROPÄISCHE PATENTSCHRIFT

(11) **EP 1 127 646 B1**
(45) Veröffentlichungstag und Bekanntmachung des Hinweises auf die Patenterteilung: **08.06.2005**
(21) Anmeldenummer: 01104016.9
(22) Anmeldetag: 20.02.2001
(51) Int. Cl.: B23D 63/12, B23D 63/14

(54) **Schleifkopf und Sägeblattschleifmaschine mit Hochfrequenz-Spindel**
Grinding head and saw blade grinding machine with a high-frequency spindle
Tête de meulage et machine à affûter des lames de scie à broche à haute fréquence

(30) Priorität: 25.02.2000 DE 10009075
(43) Veröffentlichungstag der Anmeldung: 29.08.2001
(73) Patentinhaber: Walter Maschinenbau GmbH, 72072 Tübingen (DE)
(72) Erfinder: Rein, Harry, Locust Grove, VA 22508 (US)
(74) Vertreter: Rüger, Barthelt & Abel Patentanwälte

(56) Entgegenhaltungen:
- WO-A-93/00194
- CH-A- 268 248
- DE-A- 3 133 488
- FR-A- 2 465 547
- US-A- 4 078 457

## Beschreibung

Die Erfindung betrifft einen Schleifkopf gemäß dem Oberbegriff von Anspruch 1 (siehe DE 31 33 488) und eine Sägeblattschleifmaschine mit einem solchen Schleifkopf gemäß Anspruch 12, insbesondere für Sägeblätter, deren Sägezähne eine Hohlbrust aufweisen.

Sägeblattschleifmaschinen, die bei der Wartung zum Schärfen bereits benutzter Sägeblätter oder in der Produktion verwendet werden, müssen sich jeweils an die an dem Sägeblatt vorgefundenen Verhältnisse oder die zu erzeugende Zahnform anpassen lassen. In der Regel sind an einem Zahn eines Sägeblatts, insbesondere bei hartmetallbestückten Sägeblättern, der Zahnrücken und die Zahnbrust zu schleifen. Gelegentlich werden auch Zahnflanken geschliffen. Die Schliffformen unterscheiden sich dabei. In einigen Fällen kann es bspw. zu wünschen sein, die Zahnbrust hohl zu schleifen, während in anderen Fällen ein Planschliff gewünscht ist.

Zur Erzeugung eines Hohlschliffs an einer Zahnbrust ist aus der DE 4141900 A1 ein Hohlbrustschleifverfahren bekannt, das mit einem zylindrischen Schleifkörper arbeitet, dessen Drehachse im Wesentlichen parallel zu der Zahnbrustfläche orientiert ist. Der Schleifkörper ist Teil eines Schleifstifts, der in die Mittelebene oder in zwei gegen die Mittelebene des Sägeblatts versetzten Eingriffspositionen mit der Zahnbrust in Eingriff gebracht wird, um diese zu schleifen. Je nach Versatzrichtung wird seine Drehrichtung gewählt.

Das Hohlschleifen der Zahnbrust ist nur bei einigen Sägeblättern, nicht aber bei allen Typen erforderlich. Die Sägeblattschleifmaschine soll aber in der Regel flexibel ohne Umrüsten bzw. Umbau einsetzbar sein.

Aus der DE 31 33 488 ist eine Schleifmaschine zum Schleifen von Bohrern bekannt. Die Schleifmaschine weist einen ersten Schleifkopf mit einem gesonderten Antrieb auf, dessen Welle an ihren beiden Enden jeweils ein Schleifwerkzeug trägt. Des Weiteren ist ein zweiter Schleifkopf mit einem eigenen Antrieb vorgesehen, der unabhängig von dem ersten Schleifkopf bewegbar gelagert ist. Dieser trägt eine angetriebene Welle mit einem dritten Schleifwerkzeug.

Diese Schleifeinrichtung eignet sich nicht zum Hohlschleifen der Zahnbrust eines Sägeblatts.

Weiter ist aus der CH 268248 eine Schleifeinrichtung für Sägeblätter bekannt. Die Schleifeinrichtung weist eine Aufnahmevorrichtung für Sägeblätter und einen in Bezug auf die Aufnahmeeinrichtung und somit das Sägeblatt bewegbaren Schleifkopf auf. Der Schleifkopf umfasst zwei angetriebene Wellen mit zumindest einer Schleifscheibe. Eine der Schleifscheiben ist zur Bearbeitung der Zahnbrust vorgesehen während die andere zur Bearbeitung des Zahnrückens dient.

Ein Hohlschleifen der Zahnbrust ist damit nicht vorgesehen.

Davon ausgehend ist es Aufgabe der Erfindung, an einer Sägeblattschleifmaschine eine Verbesserung zu schaffen, durch die sich möglichst viele verschiedene Typen von Sägeblättern bearbeiten lassen.

Diese Aufgabe wird mit dem Schleifkopf nach Anspruch 1 sowie der Sägeblattschleifmaschine nach Anspruch 12 gelöst.

Der erfindungsgemäße Schleifkopf weist zwei Wellen auf, die mit Antrieben für unterschiedliche Drehzahlen verbunden sind. Während die erste Welle an ihren beiden Enden mit jeweils wenigstens einer Schleifscheibe versehen werden kann, kann an der zwischen den Enden der ersten Welle angeordneten zweiten Welle ein Schleifstift angeordnet werden. Vorzugsweise sind die Antriebe der beiden Wellen so ausgelegt, dass sich die Drehzahl der ersten Welle zu der Drehzahl der zweiten Welle verhält, wie der Umfang des Schleifwerkzeugs der zweiten Welle zu dem Umfang der (größeren) Schleifscheibe der ersten Welle. Der Schleifstift läuft z.B. mit einer Drehzahl von 10.000 bis 60.000 U/min.

Durch die Anordnung der zweiten Welle in einem Bereich zwischen den Enden der ersten Welle, d.h. vorzugsweise außerhalb eines zwischen den Schleifscheiben eingeschlossenen zylindrischen oder kegelförmigen Bereichs, wird ein kompakter, stabiler, schwingungsarmer und dennoch eine gute Positionierbarkeit gestattender Aufbau erreicht. Das Hochgeschwindigkeits-Schleifwerkzeug (Schleifstift) kann problemlos mit der Zahnbrust nahezu jedes Sägeblatts in Eingriff gebracht werden. Der Abstand des Schleifkörpers des Schleifstifts von der ersten Drehachse ist vorzugsweise mindestens so groß wie der Radius der größeren Schleifscheibe, wobei sich die Drehachse schneiden oder überkreuzen können. Dadurch wird verhindert, dass die Schleifscheiben mit dem Sägeblatt in Eingriff kommen, wenn der Schleifstift aktiv sein soll. Arbeiten die Schleifscheiben, ist der Schleifstift von dem Sägeblatt entfernt. Die Positionierwege des Schleifkopfs sind bei diesem Aufbau kurz und es wird ein schnelles rationelles Arbeiten ermöglicht.

Es ergibt sich eine besonders kompakter, steifer Aufbau, wenn die an dem Schleifkopf vorgesehenen Wellen in fester räumlicher Zuordnung zueinander gehalten sind. Die an dem Schleifkopf vorgesehenen Wellen sind dabei an dem Lagerträger vorzugsweise zueinander unverstellbar gelagert.

Vorzugsweise sind die Antriebe der beiden Wellen getrennt und somit unabhängig voneinander ansteuerbar. Zu der Antriebseinrichtung für die erste Welle und die zweite Welle gehören dann ein erster und ein zweiter Antrieb, über den die Wellen jeweils separat angetrieben sind. Der zweite Antrieb ist vorzugsweise ein Hochgeschwindigkeitsantrieb mit einer Drehzahl (z.B. 60.000 U/min fix), die wenigstens zehn mal größer als die Drehzahl der ersten Welle (z.B. 1000-6000 U/min) ist. Dies ermöglicht den Einsatz von Schleifwerkzeugen an ein und demselben Schleifkopf, deren Durchmesser sich sehr stark, z.B. um mehr als eine Größenordnung unterscheiden.

Für die Positionierungen ist es vorteilhaft, wenn die erste Welle und die zweite Welle zueinander rechtwinklig, einander schneidend oder zueinander versetzt ausgerichtet sind. Dabei liegen beide Welle vorzugsweise jeweils in einer Ebene, die mit der Sägeblattmittelebene oder einer zu dieser parallelen Ebene übereinstimmt.

Die Sägeblattschleifmaschine weist nach Anspruch 12 und 13 ein Maschinengestell auf, auf dem alle wesentlichen Komponenten der Sägeblattschleifmaschine gelagert sind. Das Maschinengestell hält einen Sägeblattträger, der ggfs. in Verbindung mit einer Klemmvorrichtung dazu eingerichtet ist, das Sägeblatt zur Bearbeitung in einer Bearbeitungsposition ortsfest zu lagern. Außerdem ist eine Einrichtung vorgesehen, um das Sägeblatt zahnweise weiterzubewegen und somit die Zähne nacheinander in Bearbeitungsposition zu überführen. Dazu kann eine gesonderte Vorschubeinrichtung, ein sogenannter Teilfinger, vorgesehen sein. Alternativ kann die Vorschubeinrichtung auch Teil des Sägeblattträgers sein. Sie kann sowohl an den Zähnen des Sägeblatts, als auch an anderen Stellen des Sägeblatts oder an dem Sägeblattträger angreifen.

Vorzugsweise wird eine Vorschubeinrichtung verwendet, die variabel steuerbar ist, so dass sich bedarfsentsprechende Vorschubschritte einstellen lassen. Bei einer besonders bevorzugten Ausführungsform werden die Vorschubschritte einzeln angesteuert, um auch an ein- und demselben Sägeblatt wechselnde Vorschubschritte einstellen zu können.

Zur Bearbeitung der Zähne dient wenigstens ein erfindungsgemäßer Schleifkopf, der einen Lagerträger aufweist. Dieser kann bedarfsweise unterteilt sein (erster und zweiter Lagerträger). Die Wellen sind jeweils für sich mit wenigstens einem eigenen Schleifkörper versehen. Während eine Welle mit ein oder mehreren Schleifscheiben bestückt ist, trägt die andere einen Schleifstift. Die erste und die zweite Welle sind von einer Antriebseinrichtung angetrieben, wobei die Antriebseinrichtung vorzugsweise in zwei separate Antriebe aufgeteilt ist, die gesondert ansteuerbar sind. Dies vorzugsweise von einer übergeordneten Steuereinrichtung, die auch die sonstige Steuerung der Schleifmaschine übernimmt.

Der Schleifkopf ist so ausgebildet, dass vorzugsweise zu einem Zeitpunkt lediglich nur einer der Schleifkörper mit dem Sägeblatt in Eingriff kommt. Entsprechend genügt der Antrieb jeweils einer Welle. Der Schleifstift ist zur Bearbeitung der Zahnbrust vorgesehen. Die Schleifscheibe(n) ist (sind) in erster Linie zur Bearbeitung des Zahnrückens sowie bedarfsweise der Zahnbrust vorgesehen.

Der Hochgeschwindigkeitsantrieb für den Schleifstift kann als Nachrüstsatz zum Anbau an vorhandene oder entsprechend vorgerüstete Schleifköpfe vorgesehen ausgebildes sein.

Eine von dem Maschinengestell getragene Positioniereinrichtung lässt wenigstens zwei lineare Verstellrichtungen und optional eine Schwenkbewegung um eine senkrecht auf dem Sägeblatt stehende Schwenkachse B und gegebenenfalls um eine weitere Schwenkachse zu. Durch das Schwenken wird eine Anpassung der Ausrichtung der Schleifscheibe und des Schleifstifts an den Zahnrücken und an die Zahnbrust ermöglicht. Zusätzliche Linearachsen gestatten eine Vorschubbewegung. Im Idealfall sind drei zueinander jeweils rechtwinklige Linearachsen vorgesehen.

Ein wesentlicher Vorteil der neuen Schleifmaschine liegt darin, dass auch Sägeblätter, deren Zähne eine Hohlbrust aufweisen, in einem Arbeitsgang in einer Aufspannung mit einer Maschine vollständig geschliffen werden können. Manueller Eingriff ist in der Regel nicht erforderlich und die Positionierwege sind kurz.

Die Positioniereinrichtung ist von dem Maschinengestell getragen, um eine präzise Zuordnung und Positionierung in Bezug auf das Sägeblatt zu ermöglichen. Anstelle der Schwenkachse B kann auch das Sägeblatt an eine andere Position verfahren werden, wobei der Schleifkopf unverschwenkt bleibt. Dies kann durch eine Verstellung des Sägeblattträgers auf einer bogenförmigen oder geraden Bahn seitlich zu einer Verbindungslinie zwischen dem Sägeblattträger und dem Schleifkopf erfolgen. Außerdem kann die Drehachse des Sägeblatts in Verbindung mit der seitlichen Verstellung des Schleifkopfs die B-Achse ersetzen.

Eine Steuereinrichtung kontrolliert die Arbeit der Sägeblattschleifmaschinen und steuert sowohl die Positioniereinrichtung als auch die Vorschubeinrichtung sowie die Halteeinrichtung und die Antriebseinrichtung. Damit kann der gesamte Schleifprozess kontrolliert ablaufen. Sowohl die vorzugsweise flexible Steuereinrichtung als auch die oben genannte Anordnung der sonstigen Komponenten gestattet die Komplettbearbeitung des Sägeblatts in einer Aufspannung in ein- und derselben Sägeblattschleifmaschine. Die Sägeblattschleifmaschine ist überdies flexible und vielseitig verwendbar.

Zur Anpassung an unterschiedliche Sägeblattdurchmesser ist der Sägeblattträger vorzugsweise verstellbar an dem Maschinengestell gelagert, um die Entfernung zu dem Schleifkopf einstellen zu können. Alternativ kann die Anpassung der Position des Schleifkopfs an unterschiedliche Sägeblattdurchmesser durch eine Verstellung des Schleifkopfs vorgenommen werden. Insgesamt sind somit drei Linearachsen zur Positionseinstellung ausreichend. Außerdem ist wenigstens eine Schwenkachse für den Schleifkopf vorhanden. Ist der Sägeblattträger an dem Maschinengestell nicht ortsfest sondern verstellbar gelagert, weist er vorzugsweise einen Verstellantrieb auf, der wie alle anderen Antriebe ebenfalls von der Steuereinrichtung gesteuert ist. Dies ermöglicht ein flexibles Bearbeiten von aus unterschiedlichen Sägeblättern zusammengesetzten Losen.

Vor dem Schleifkopf ist als Halteeinrichtung zum Abstützen des Sägeblatts vorzugsweise eine Klemmeinrichtung vorgesehen, die fest an dem Maschinengestell abgestützt ist. Die Klemmeinrichtung fasst das Sägeblatt in der Nähe des zu bearbeitenden Zahns und ist vorzugsweise von der Steuereinrichtung steuerbar.

Die an der ersten Welle vorhandene Schleifscheibe ist wenigstens an ihrer Umfangsfläche mit abrasivem Material versehen. Zusätzlich kann sie an einer ihrer Flachseiten oder an beiden Flachseiten mit Schleifkorn belegt sein, um verschiedene Flächen des Sägezahns bearbeiten zu können.

Der mit hoher und höchster Drehzahl laufende Schleifstift weist vorzugsweise einen zylinder- oder kegelförmigen Schleifkörper auf, wobei sein Radius bei einer zweckmäßigen Ausführungsform größer ist als die in Axialrichtung gemessene Dicke eines Zahns des Sägeblatts. Um einen besonders tief ausgerundete Hohlkehle an der Zahnbrust zu erzeugen, kann der Durchmesser kleiner sein als die Zahndicke.

Weitere Einzelheiten vorteilhafter Ausführungsformen der Erfindung sind Gegenstand von Unteransprüchen, der Zeichnung oder der Beschreibung. In der Zeichnung ist ein Ausführungsbeispiel der Erfindung veranschaulicht. Es zeigen:
Fig. 1 eine Sägeblattschleifmaschine in einer und vereinfachten Perspektivdarstellung,
Fig. 2 die Sägeblattschleifmaschine nach Fig. 1 als schematisierte Funktionsdarstellung,
Fig. 3 den Schleifkopf der Sägeblattschleifmaschinen nach Figur 1, in einer schematisierten Vorderansicht,
Fig. 4 den Schleifkopf nach Figur 3 beim Bearbeiten eines Zahnrückens, in einer schematisierten Draufsicht,
Fig. 5 den Schleifkopf nach Figur 3 beim Bearbeiten einer Zahnbrust mittels einer Planscheibe (Planschliff), in einer schematisierten Draufsicht,
Fig. 6 den Schleifkopf nach Figur 3 beim Bearbeiten einer Zahnbrust mittels eines Schleifstifts (Hohlschliff), in einer schematisierten Draufsicht, und
Fig. 7 den Schleifkopf nach Figur 3, in einer schematisierten Seitenansicht.

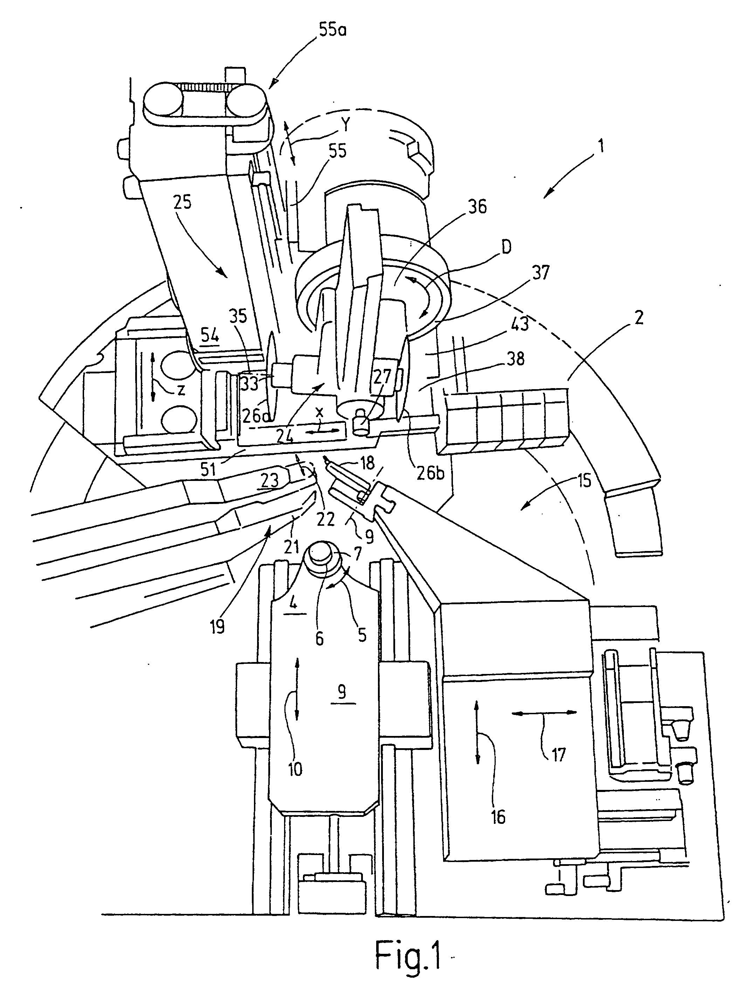

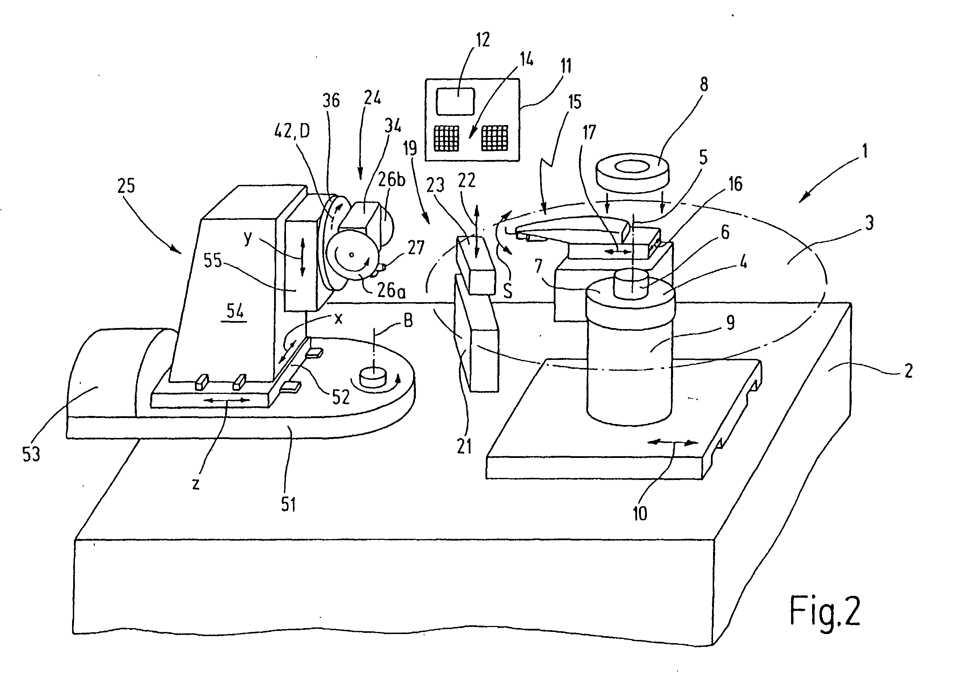

In Figur 1 ist eine Schleifmaschine 1 veranschaulicht, die als Sägeblattschleifmaschine dient. Die Schleifmaschine 1 weist ein Maschinengestell 2 auf, das ortsfest auf einer nicht weiter veranschaulichten Aufstellfläche aufgestellt ist. Die Schleifmaschine 1 dient zum Schleifen von Sägeblättern, insbesondere Kreissägeblättern 3, wie es in Figur 2 lediglich schematisch veranschaulicht ist. Zur Lagerung des Sägeblatts 3 dient ein Sägeblattträger 4, der um eine Drehachse 5 drehbar gelagert ist. Der Sägeblattträger 4 weist zur Aufnahme und Ausrichtung des Sägeblatts 3 einen Dorn 6 auf, der von einer planen Anlagefläche 7 des Sägeblattträgers 4 aufragt und das Sägeblatt 3 zentriert.

Zur Befestigung des Sägeblatts 3 an dem Sägeblattträger 4 dient ein Klemmring 8, der somit ggfs. in Zusammenwirkung mit weiteren nicht veranschaulichten Spanneinrichtungen als Befestigungsmittel dient.

Der Sägeblattträger 4 ist von einer Lagereinrichtung 9 getragen, die den Sägeblattträger um die Drehachse 5 drehbar und zusätzlich entlang einer durch einen Pfeil 10 bezeichneten Richtung verschiebbar lagert. Der Antrieb zur Durchführung der Verschiebebewegung ist in Figur 2 nicht weiter veranschaulicht. Er untersteht einer Steuereinrichtung 11, mit einer Anzeigeeinrichtung 12 und Eingabeelementen 14.

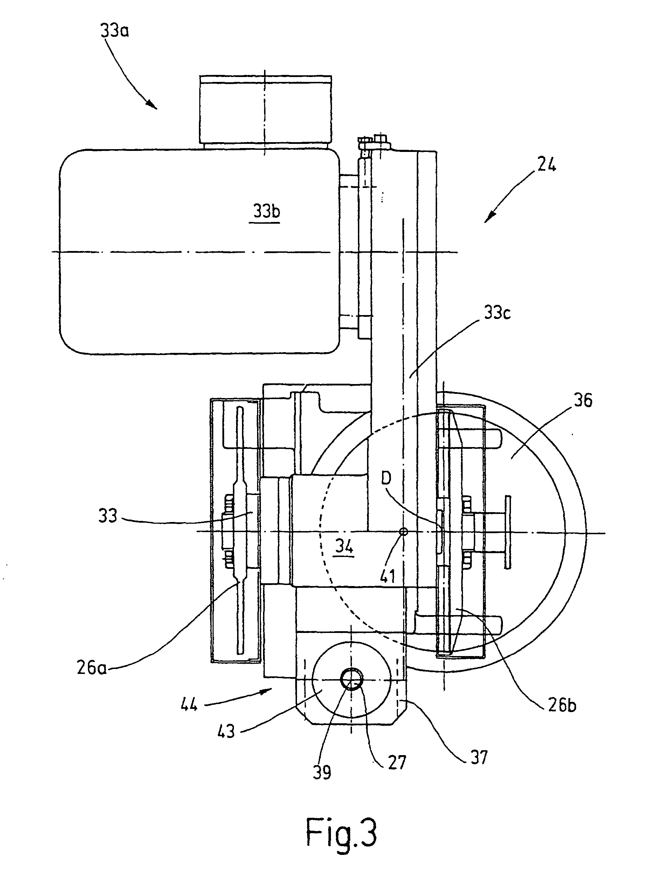

Die Steuereinrichtung 11 steuert außerdem eine Vorschubeinrichtung 15, die auf dem Maschinengestell 2 gelagert ist. Sie dient zum schrittweisen Drehen des Sägeblatts 3, um jeweils einen Zahn 3a (Fig. 3) desselben in Bearbeitungsposition zu überführen. Die Vorschubeinrichtung 15 weist einen in wenigstens einer, vorzugsweise zwei Richtungen 16, 17 bewegbaren Finger 18 auf, der das Sägeblatt 3 zahnweise um seine Drehachse 5 drehen kann. Der Finger 18 ist außerdem um eine Schwenkachse S schwenkbar gelagert, um wie eine Sperrklinke über die Zähne 3a gleiten zu können. Ein (von der Steuereinrichtung 11) gesteuerter Antrieb oder eine Feder lassen den Finger 18 in die Zahnzwischenräume greifen.

Außerdem ist eine ebenfalls von der Steuereinrichtung 11 gesteuerte Halteeinrichtung 19 vorgesehen, die dazu dient, das Sägeblatt 3 zur Bearbeitung seines jeweiligen Zahns ruhend zu lagern und die von dem Maschinengestell 2 getragen ist. Zu der Halteeinrichtung 19 gehört ein ortsfester unterer Backen 21 und ein in Richtung eines Pfeiles 22 etwa parallel zu der Drehachse 5 bewegbarer oberer Backen 23. Die Backen 21, 22 können bedarfsweise auch durch einen einzigen Backen mit einem steuerbaren Magneten oder dgl. ersetzt sein.

Zur Durchführung einer Schleifbearbeitung des Sägeblatts 3 dient ein Schleifkopf 24, der von einer Positioniereinrichtung 25 getragen und an dem Maschinengestell 2 abgestützt ist. Der Schleifkopf 24 weist, wie aus Fig. 3 hervorgeht, zwei Schleifscheiben 26a, 26b und einen Schleifstift 27 auf.

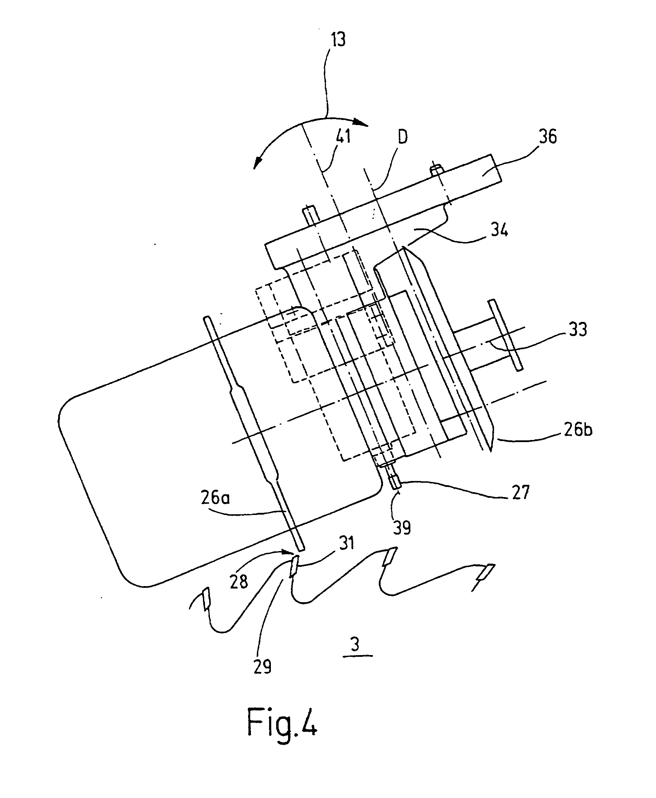

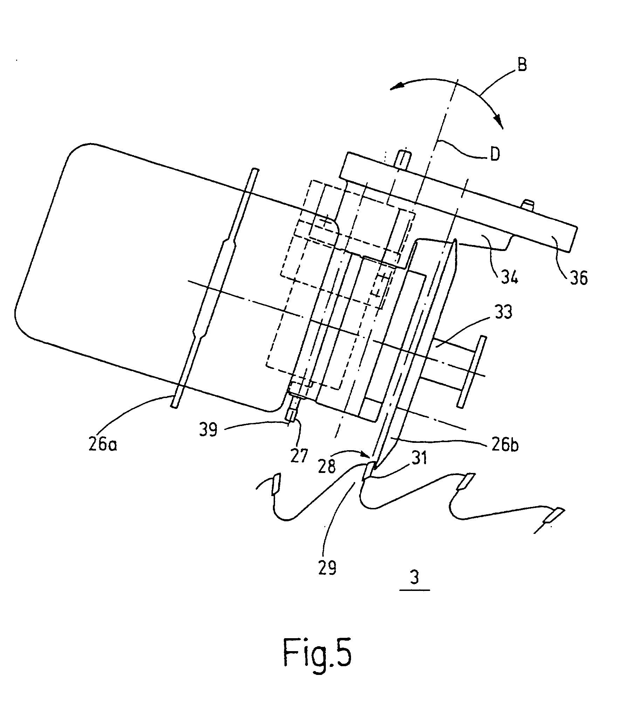

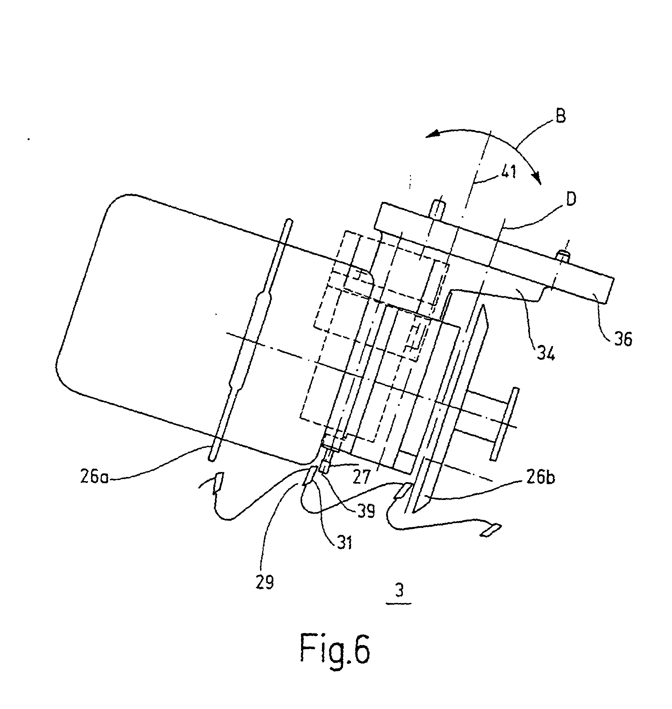

Die Schleifscheiben 26a, 26b sind, wie aus Figur 4 und 5 hervorgeht, zur Schleifbearbeitung eines Zahnrückens 28 und einer flachen (planen) Zahnbrust eines Zahns 29 des Sägeblatts 3 vorgesehen, während der Schleifstift 27 gemäß Figur 6 zur Bearbeitung einer Zahnbrust 31 dient. Die Schleifscheiben 26a, 26b ist von einer Welle 33 getragen, die an einem Lagerträger 34 um eine Drehachse 35 drehbar gelagert oder alternativ fixiert ist und an deren Enden sie befestigt sind. Der Lagerträger 34 ist mit einer Grundplatte 36 verbunden, die von der Positioniereinrichtung 25 getragen ist. Bei einer Ausführungsform ist die Grundplatte um eine Achse D (Fig. 1) schwenkbar, die etwa parallel zu dem Sägeblatt 3 auf dessen Mitte hin weist und die somit etwa parallel zu der durch den Pfeil 10 bezeichneten Richtung ist.

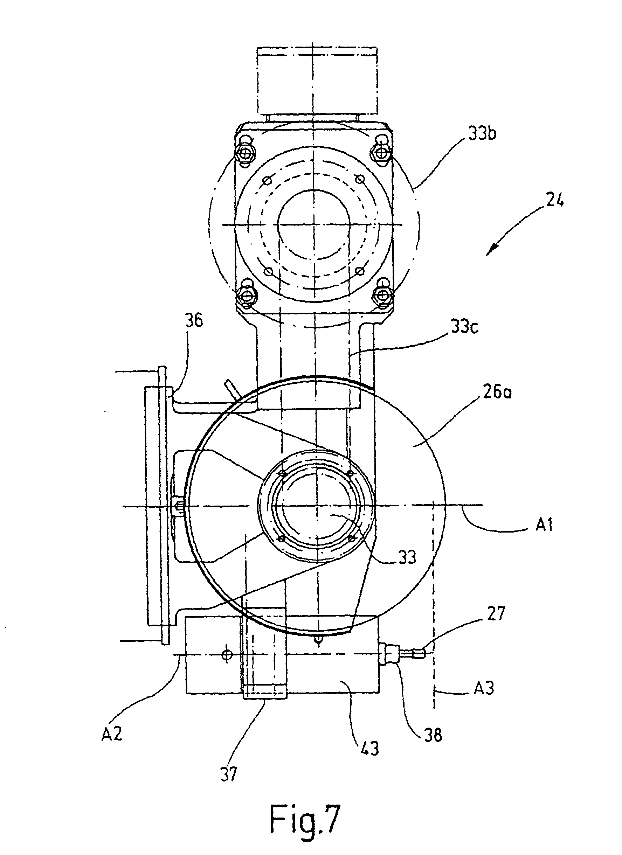

An dem Lagerträger 34 ist ein Träger 37 (Fig. 3) befestigt, der eine Spindel oder Welle 38 aufweist. Diese ist um eine Drehachse 39 drehbar gelagert und trägt an einem Ende den Schleifstift 27. Die Drehachsen 35, 39 sind vorzugsweise rechtwinklig zueinander ausgerichtet und in zueinander parallelen Ebenen A1, A2 (Figur 7) parallel zu dem Sägeblatt 3 angeordnet. Bedarfsweise kann die Grundplatte 36, wie in den Figuren 3 und 4 bis 6 durch eine Achse 41 angedeutet, schwenkbar gelagert sein (Pfeil 42 in Figur 2). Damit lässt sich die Drehachse 35 gegen die Sägeblattebene kippen, was jedoch nicht in jedem Fall erforderlich ist. Die Ebenen A1, A2 haben einen Abstand voneinander, der etwa der Summe aus dem Schleifscheibenradius, dem Schleifstiftradius und der Sägeblattdicke entspricht. Außerdem ist der Schleifstift 27, wie in Figur 7 durch eine gestrichelte Linie A3 angedeutet ist, unterhalb der Planschleiffläche der Schleifscheibe 26b angeordnet (bzgl. Der y-Richtung).

Der Träger 37 bildet mit einem Spindelmotor 43 (Hochfrequenzspindel) und dem Schleifstift 27 einen Schleifmodul 44, der vorzugsweise fest installiert ist. In dem Schleifmodul 44 sind Kühlkanäle zur Kühlung des als Hochleistungsantriebs ausgebildeten Spindelmotors 43 vorgesehen. Außerdem führen Kanäle bedarfsweise dem Schleifstift 27 ein Kühl-Schmierfluid zu.

Der Antrieb der ersten Welle 33 erfolgt über eine Antriebseinrichtung, zu der ein von dem Lagerträger 33 gehaltener Motor 33a und ein Getriebe 33b (Zahnriemen) gehören. Sowohl der Antrieb der Welle 33 als auch der Antrieb der Welle 38 untersteht vorzugsweise der Steuereinrichtung 11. Somit sind beide Wellen 33, 38 bedarfsweise und unabhängig voneinander antreibbar.

Die Positioniereinrichtung 25 weist einen Träger 51 auf, der bei einer Ausführungsform um eine parallel zu der Drehachse 5 ausgerichtet Schwenkachse B schwenkbar gelagert ist. Ein entsprechender, nicht weiter veranschaulichter, Schwenkantrieb zur Festlegung ausgewählter Schwenkpositionen untersteht der Steuerung der Steuereinrichtung 11. Der Träger 51 ist mit einer Linearführung versehen, die einen Schlitten 52 in eine Z-Richtung (Fig. 2) von der Schwenkachse B weg und auf diese zu oder in X-Richtung (Fig. 1) linear verstellbar geführt. Ein entsprechender Z-Antrieb 53 (X-Antrieb) wird ebenfalls von dem Träger 51 getragen.

Auf dem Schlitten 52 ist in X-Richtung (Z-Richtung in Fig. 1) verschiebbar ein weiterer Träger 54 gelagert, der somit etwa in Umfangsrichtung bezüglich des Sägeblatts 3 (je nach Schwenkstellung des Trägers 51) verstellbar ist. Ein entsprechender Verstellantrieb ist nicht weiter veranschaulicht und untersteht der Steuerung 11.

An dem Träger 54 ist (vertikal in Y-Richtung verstellbar ein Schlitten 55 gelagert, der die Grundplatte 36 trägt. Der Schlitten 55 wird von einem Verstellantrieb 55a positioniert, der von der Steuereinrichtung 11 gesteuert ist.

Die insoweit beschriebene Schleifmaschine 1 arbeitet wie folgt:

Zum Bearbeiten des Sägeblatts 3 an seinen Zahnbrustflächen 31 wird dieses auf dem Sägeblattträger 4 angeordnet und mit dem Befestigungsmittel 8 festgeklemmt. Die Vorschubeinrichtung 15 positioniert das Sägeblatt 3 nun in eine gewünschte erste Schleifposition, wie sie bspw. in Figur 6 veranschaulicht ist. Mit der Halteeinrichtung 19 wird das Sägeblatt 3 nun in dieser Lage festgeklemmt und der Schleifkopf 24 (insbesondere in Y-Richtung) so positioniert, dass der Schleifstift 27, wie in Figur 3 veranschaulicht, vor dem Zahn 29 steht. Die Drehachse 39 ist parallel zu der Zahnbrustfläche ausgerichtet. Der Antrieb 43 wird von der Steuereinrichtung 11 nun so angesteuert, dass der Schleifstift 27 mit hoher Drehzahl läuft. Die Schleifscheibe 26 kann dabei in Ruhe bleiben.

Nachdem die Drehachse 39 vorzugsweise im Wesentlichen parallel zu der Z-Achse ausgerichtet ist, wird der Antrieb 53 angesteuert, so dass der Schleifkopf 24 eine Bewegung in Z-Richtung und somit längs der Drehachse 39 des Schleifstifts 27 vollführt. Dies kann in Sägeblattmitte erfolgen. Bedarfsweise kann durch Verstellung der Y-Achse auch ein Versatz zur Sägeblattmittelebene erreicht werden. Der Schleifvorgang der Zahnbrustfläche 31 kann bedarfsweise in verschiedenen Y-Positionierungen wiederholt werden, um eine Schneidbrustflächenform zu erzeugen, die von der Form der Mantelfläche des Schleifstifts 27 abweicht. Zusätzlich oder anstelle der Betätigung der Y-Achse kann auch die Y-Achse betätigt werden, um den Schleifstift 27 vertikal zu verstellen. Außerdem kann eine Bewegung in X-Richtung erfolgen, die im Wesentlichen mit der Umfangsrichtung des Sägeblatts übereinstimmt.

Wegen des Höhenversatzes (in Y-Richtung) zwischen dem Schleifstift 27 und den Schleifscheiben 26a, 26b um vorzugsweise wenigstens einen Schleifscheibenradius steht die Schleifscheibe 26b oberhalb des Sägeblatts, so dass der Schleifkopf 24 ungehindert bewegt und positioniert werden kann, ohne dass die Schleifscheiben 26a, 26b ungewollt mit dem Sägeblatt 3 in Eingriff kommen.

Nach dem Schleifen des Zahns 27 an seiner Zahnbrust wird der Schleifkopf 24 in Z-Richtung etwas nach außen gefahren und die Halteeinrichtung 19 wird geöffnet. Mit der Vorschubeinrichtung 15 wird das Sägeblatt 3 um einen Zahn weitergeschaltet und danach durch die Halteeinrichtung 19 wieder festgeklemmt, wonach die nächste Zahnbrust 31 bearbeitet werden kann.

Wenn alle Zahnbrustflächen aller Zähne des Sägeblatts 3 bearbeitet sind, können, ohne das Sägeblatt 3 wechseln zu müssen, die Zahnrückenflächen 28 bearbeitet werden. Dazu wird der Schleifkopf 24 in die in Figur 4 veranschaulichte Position überführt und in Y-Richtung abgesenkt. Die Drehachse 35 ist im Wesentlichen parallel zu dem jeweils zu schleifenden Zahnrücken 28 ausgerichtet. Eine Ansteuerung in Richtung der X-Achse, d.h. parallel zu der Drehachse 35 (die vorzugsweise parallel zu der X-Achse ausgerichtet ist) führt nun zum Schleifen des Zahnrückens 28. Soll dieser plan ausgebildet werden, kann zusätzlich eine Bewegung in Y-Richtung ausgeführt werden. Bspw. kann dies erfolgen, wenn der gesamte Zahnrücken 28 mit der Umfangsfläche der Schleifscheibe 26a in Eingriff steht.

Ist ein Zahnrücken 28 geschliffen, steuert die Steuereinrichtung 11 die Klemmvorrichtung 19 und die Vorschubeinrichtung 15 an, um den nächsten Zahn in Bearbeitungsposition zu bringen und dort wiederum festzuklemmen. Auf diese Weise werden nacheinander alle Zahnrücken bearbeitet.

Zusätzlich oder alternativ zu dem Hohlschliff der Zahnbrust nach Fig. 6 kann die Zahnbrust auch plan geschliffen werden. Der Planschliff kann sich auf Außenbereiche der Zahnbrust beschränken oder diese ganz erfassen. Der Schleifvorgang ist in Fig. 5 veranschaulicht. Ist ein solcher Planschliff nicht erforderlich, kann die Schleifscheibe 26b auch entfallen. Alternativ kann anstelle der Schleifscheibe 26b auch die Schleifscheibe 26a entfallen, wenn kein Zahnrückenschliff erforderlich ist.

Der Schleifkopf weist somit zwei Arbeitsebenen A1, A2 (Fig. 7) auf, die senkrecht zu dem Sägeblatt 3 (Y-Richtung) gegeneinander versetzt sind. Der Versatz ist vorzugsweise etwas größer als ein Radius der Schleifscheiben 26a, 26b. Die Arbeitsebene A1 ist den Schleifscheiben 26a, 26b zugeordnet, während die andere Arbeitsebene A2 dem Schleifstift 27 zugeordnet ist. Vorzugsweise ist der Abstand oder Versatz zwischen den Arbeitsebenen gleich der Summe aus dem (größten anzunehmenden) Radius der Schleifscheiben 26a, 26b und dem (größten anzunehmenden) Durchmesser des Schleifstifts. Jedenfalls ist der Abstand aber so bemessen, dass die Schleifscheiben 26a, 26b in einem ausreichenden Sicherheitsabstand über dem Sägeblatt 3 stehen, wenn der Schleifstift 27 in Eingriff mit der Zahnbrust in seiner tiefsten Position steht. Der Abstand zwischen den Arbeitsebenen A1, A2 ist insbesondere in Fig. 7 veranschaulicht.

. Soll ohne oder mit geringerer vertikalen Positionierbewegung ausgekommen werden, können die Achsen 33, 38 auch in geringerem Abstand voneinander angeordnet werden. Der Schleifkörper des Schleifstifts 27 ist aber in jedem Fall außerhalb eines Volumens oder Bereichs angeordnet, der zwischen den Schleifscheiben von dem Sägeblatt mit dem größten anzunehmenden Durchmesser begrenzt wird, wenn dieses in der Arbeitsebene des Schleifstifts an die Schleifscheiben angenähert wird und diese gerade noch nicht berührt. So kann der Schleifstift 27 mit dem Sägeblatt in Eingriff gebracht werden, ohne dass das Sägeblatt mit den Schleifscheiben in Eingriff kommt und es wird dennoch ein kompakter(steifer) Aufbau erreicht, der kurze Stellwege gestattet.

Das Sägeblatt 3 wird an allen Zahnbrustflächen und Zahnrücken in einer Aufspannung geschliffen. Ist es fertig geschliffen, wird es abgenommen und durch das nächstfolgend zu bearbeitende Sägeblatt ersetzt. Weicht dessen Durchmesser von dem Durchmesser des vorstehend bearbeitenden Sägeblatts 3 ab, wird die Lagereinrichtung 9 für den Sägeblattträger 4 in Richtung des Pfeils 10 so verstellt, dass die jeweils in Bearbeitungsposition befindlichen Zähne wieder im Bereich der Halteeinrichtung 19 und des Schleifkopfs 24 stehen.

Eine Schleifmaschine 1, die vorzugsweise zum Schärfen von Sägeblättern 3 dient, weist einen Maschinenrahmen 2 auf, der eine Einrichtung zum Lagern des Sägeblatts zum ortsfest ruhenden Festklemmen desselben und zum zahnweisen Weiterschalten trägt. Außerdem trägt das Maschinengestell 2 eine Positioniereinrichtung, die einen Schleifkopf 24 führt. Der Schleifkopf 24 weist zwei voneinander unabhängige, vorzugsweise rechtwinklig zueinander ausgerichtete Spindeln auf, die vorzugsweise separate Antriebe tragen und rechtwinklig zueinander ausgerichtet sind. Der Schleifkopf 24 ist schwenkbar sowie in drei Raumrichtungen verstellbar gelagert. In einer ausgewählten Schwenkposition ist eine dieser Raumrichtungen (Z-Richtungen) radial zu dem Sägeblatt 3 ausgerichtet. In dieser Position ist die Drehachse 35 einer Spindel in Umfangsrichtung und die Drehachse 39 der anderen Spindel in Radialrichtung ausgerichtet. Ein solcher Schleifkopf gestattet das Hohlschleifen von Zahnbrustflächen mit Schleifstiften geringen Durchmessers. Zum Antrieb dient ein gesonderter hochtouriger Motor.

## Patentansprüche

1. Schleifkopf (24) für eine Schleifmaschine,
mit einem Lagerträger (34), an dem eine erste Welle (33) drehbar gelagert ist, die mit einer ersten Antriebseinrichtung in Antriebsverbindung steht und die an einem Ende wenigstens eine Schleifscheibe (26a) trägt, wobei an dem Schleifkopf (24) eine zweite Welle (38) vorgesehen ist, die mit einer zweiten Antriebseinrichtung in Antriebsverbindung steht und an einem Ende ein Schleifwerkzeug (27) trägt,
wobei die zweite Welle (38) in einem Bereich zwischen den Enden der ersten Welle (33) angeordnet ist,
**dadurch gekennzeichnet,**
**dass** die zweite Antriebseinrichtung ein Hochgeschwindigkeitsantrieb ist, dessen Drehzahl wenigstens zehn Mal größer ist als die Drehzahl der Antriebseinrichtung der ersten Welle (33), und
**dass** das an der zweiten Welle (38) vorgesehene Schleifwerkzeug als Schleifstift (27) ausgebildet ist, dessen Durchmesser sich von dem Durchmesser der Schleifscheibe (26a) um mehr als eine Größenordnung unterscheidet.

2. Schleifkopf nach Anspruch 1, **dadurch gekennzeichnet, dass** die an dem Schleifkopf (24) vorgesehenen Wellen (33, 38) in fester räumlicher Zuordnung zueinander gehalten sind.

3. Schleifkopf nach Anspruch 1, **dadurch gekennzeichnet, dass** die an dem Schleifkopf (24) vorgesehenen Wellen (33, 38) an dem Lagerträger (34) zueinander unverstellbar gelagert sind.

4. Schleifkopf nach Anspruch 1, **dadurch gekennzeichnet, dass** die Antriebseinrichtung für die erste Welle (33) und der Hochgeschwindigkeitsantrieb die erste Welle (33) und die zweite Welle (38) jeweils separat antreiben.

5. Schleifkopf nach Anspruch 1, **dadurch gekennzeichnet, dass** die erste Welle (33) und die zweite Welle (37) zueinander rechtwinklig, einander schneidend oder zueinander versetzt ausgerichtet sind.

6. Schleifkopf nach Anspruch 1, **dadurch gekennzeichnet, dass** die erste Welle (33) an ihren beiden Enden jeweils wenigstens ein Schleifwerkzeug (26a, 26b) trägt und dass die zweite Welle (38) mit ihrem Antrieb (43) außerhalb des zwischen den Schleifwerkzeugen (26a, 26b) eingeschlossenen Bereichs angeordnet ist.

7. Schleifkopf nach Anspruch 6, **dadurch gekennzeichnet, dass** wenigstens eine der Schleifscheiben (26a, 26b) wenigstens an ihrer Umfangsfläche mit abrasivem Material versehen ist.

8. Schleifkopf nach Anspruch 6, **dadurch gekennzeichnet, dass** wenigstens eine der Schleifscheiben (26a, 26b) wenigstens an einer ihrer Flachseiten mit abrasivem Material versehen ist.

9. Schleifkopf nach Anspruch 6, **dadurch gekennzeichnet, dass** wenigstens eine der Schleifscheiben (26a, 26b) zur Bearbeitung des Zahnrückens (28) eingerichtet ist.

10. Schleifkopf nach Anspruch 1, **dadurch gekennzeichnet, dass** der Schleifstift (27) zur Bearbeitung der Zahnbrust (31) zur Erzeugung eines Hohlschliffs eingerichtet ist.

11. Schleifkopf nach Anspruch 1, **dadurch gekennzeichnet, dass** der Schleifstift (27) kegelstumpf- oder zylinderförmig ausgebildet ist und dass sein halber Radius vorzugsweise geringer ist als die in Axialrichtung gemessene Dicke eines Zahns (29) des Sägeblatts (3).

12. Sägeblattschärfmaschine insbesondere für Kreissägeblätter (3), mit einem Schleifkopf nach einem der Ansprüche 1 bis 11.

13. Sägeblattschleifmaschine nach Anspruch 12, **dadurch gekennzeichnet, dass** sie außerdem aufweist:
ein Maschinengestell (2), das dazu eingerichtet ist, auf einer Aufstellfläche aufgestellt zu werden,
einen Sägeblattträger (4), der von dem Maschinengestell (2) getragen ist, der eine Ausrichteinrichtung (6) zur definierten Aufnahme des Sägeblatts (3) und ein Befestigungsmittel (8) für das Sägeblatt (3) aufweist,
eine Vorschubeinrichtung (15), die dazu eingerichtet ist, das Sägeblatt (3) Zahn für Zahn in Bearbeitungsposition zu überführen und die von dem Maschinengestell (2) getragen ist,
eine Halteeinrichtung (19), die von dem Maschinengestell (2) getragen ist, zur ruhenden Lagerung des Sägeblatts (3) in Bearbeitungsposition,
eine von dem Maschinengestell (2) getragene Positioniereinrichtung (25), die wenigstens zwei lineare Verstellrichtungen (X, Z) aufweist und die den Schleifkopf (24) trägt, und
eine Steuereinrichtung (11), die sowohl die Positioniereinrichtung (25) als auch die Vorschubeinrichtung (15), die Halteeinrichtung (19) und die Antriebseinrichtung steuert.

14. Sägeblattschleifmaschine nach Anspruch 13, **dadurch gekennzeichnet, dass** der Sägeblattträger (4) an dem Maschinengestell (2) quer (10) zu seiner Drehachse (5) verstellbar gelagert ist.

15. Sägeblattschleifmaschine nach Anspruch 13, **dadurch gekennzeichnet, dass** zur Verstellung des Sägeblattträgers (4) eine Verstellrichtung (10) auf den Schleifkopf (24) hin und von diesem weg vorgegeben ist.

16. Sägeblattschleifmaschine nach Anspruch 13, **dadurch gekennzeichnet, dass** zur Verstellung des Sägeblattträgers (4) ein Verstellantrieb vorgesehen ist, der von der Steuereinrichtung (11) gesteuert ist.

17. Sägeblattschleifmaschine nach Anspruch 13, **dadurch gekennzeichnet, dass** die Halteeinrichtung (19) von der Steuereinrichtung (11) gesteuert in einen Aktivzustand und in einen Passivzustand überführbar ist, wobei das Sägeblatt (3) in dem Aktivzustand unverdrehbar ruhend gelagert und in dem Passivzustand freigegeben und somit verdrehbar ist.

18. Sägeblattschleifmaschine nach Anspruch 13, **dadurch gekennzeichnet, dass** die Halteeinrichtung (19) eine Klemmeinrichtung mit einem beweglichen und einem fest an dem Maschinengestell gelagerten Klemmbacken (21) ist.

19. Sägeblattschleifmaschine nach Anspruch 13, **dadurch gekennzeichnet, dass** die Positioniereinrichtung (25) drei lineare Verstellrichtungen (X, Y, Z) aufweist, die zueinander rechtwinklig orientiert sind.

20. Sägeblattschleifmaschine nach Anspruch 13, **dadurch gekennzeichnet, dass** die Positioniereinrichtung (25) eine Schwenkachse (B) aufweist, um die der Schleifkopf (24) schwenkbar ist und die parallel zu einer Drehachse (5) des Sägeblattträgers (4) ausgerichtet ist.

21. Sägeblattschleifmaschine nach Anspruch 13, **dadurch gekennzeichnet, dass** der Sägeblatträger (4) zur Realisierung einer Relativverschwenkung zischen Schleifkopf (24) und Zahn quer zu einer gedachten Verbindungslinie zwischen dem Schleifkopf und einer Drehachse (5) des Sägeblattträgers (4) bewegbar ist.

## Claims

1. Grinding head (24) for a grinding machine,
with a bearing support (34), on which a first shaft (33) is rotatably disposed, which stands in drive connection with a first drive means and which carries at least one grinding disc (26a) on one end, wherein on the grinding head (24) a second shaft (38) is provided, which stands in drive connection with a second drive means and carries a grinding tool (27) on one end,
wherein the second shaft (38) is arranged in a region between the ends of the first shaft (33),
**characterised in that**
the second drive means is a high-speed drive, the rotational speed of which is at least ten times higher than the rotational speed of the drive means of the first shaft (33), and
that the grinding tool provided on the second shaft (38) is configured as a grinding point (27), the diameter of which differs from the diameter of the grinding disc (26a) by more than one order of magnitude.

2. Grinding head according to Claim 1, **characterised in that** the shafts (33, 38) provided on the grinding head (24) are held in fixed spatial coordination to one another.

3. Grinding head according to Claim 1, **characterised in that** the shafts (33, 38) provided on the grinding head (24) are disposed on the bearing support (34) to be non-displaceable relative to one another.

4. Grinding head according to Claim 1, **characterised in that** the drive means for the first shaft (33) and the high-speed drive respectively drive the first shaft (33) and the second shaft (38) separately.

5. Grinding head according to Claim 1, **characterised in that** the first shaft (33) and the second shaft (37) are oriented at right angles to one another, to intersect one another or are oriented offset relative to one another.

6. Grinding head according to Claim 1, **characterised in that** at its two ends the first shaft (33) respectively carries at least one grinding tool (26a, 26b), and that the second shaft (38) is arranged with its drive (43) outside the region enclosed between the grinding tools (26a, 26b).

7. Grinding head according to Claim 6, **characterised in that** at least one of the grinding discs (26a, 26b) is provided with abrasive material at least on its peripheral face.

8. Grinding head according to Claim 6, **characterised in that** at least one of the grinding discs (26a, 26b) is provided with abrasive material at least on one of its flat sides.

9. Grinding head according to Claim 6, **characterised in that** at least one of the grinding discs (26a, 26b) is fitted for machining the tooth back (28).

10. Grinding head according to Claim 1, **characterised in that** the grinding point (27) is fitted for machining the tooth face (31) to generate a hollow grind.

11. Grinding head according to Claim 1, **characterised in that** the grinding point (27) is truncated cone-shaped or a cylindrical, and that its half radius is preferably smaller than the thickness of a tooth (29) of the saw blade (3) measured in axial direction.

12. Saw blade sharpening machine in particular for circular saw blades (3) with a grinding head according to one of Claims 1 to 11.

13. Saw blade grinding machine according to Claim 12, **characterised in that** it additionally has:
a machine frame (2), which is fitted to be erected on an assembly surface,
a saw blade holder (4) held by the machine frame (2), which has a locating means (6) for defined seating of the saw blade (3) and a fastening element (8) for the saw blade (3),
an advancing means (15), which is fitted for moving the saw blade (3) tooth by tooth into the machining position and which is held by the machine frame (2),
a holding means (19), which is held by the machine frame (2), for holding the saw blade (3) at rest in the machining position,
a positioning means (25) held by the machine frame (2), which has at least two linear adjusting directions (X, Z) and which holds the grinding head (24), and
a control means (11), which controls the positioning means (25) as well as the advancing means (15), the holding means (19) and the drive means.

14. Saw blade grinding machine according to Claim 13, **characterised in that** the saw blade holder (4) is disposed on the machine frame (2) to be displaceable transversely (10) to its rotational axis (5).

15. Saw blade grinding machine according to Claim 13, **characterised in that** an adjusting direction (10) towards and away from the grinding head (24) is predetermined for adjustment of the saw blade holder (4).

16. Saw blade grinding machine according to Claim 13, **characterised in that** for adjustment of the saw blade holder (4) an adjusting drive is provided, which is controlled by the control means (11).

17. Saw blade grinding machine according to Claim 13, **characterised in that** controlled by the control means (11), the holding means (19) can be moved into an active state and a passive state, wherein in the active state the saw blade (3) is disposed to be incapable of torsional movement at rest and in the passive state is released and is therefore capable of torsional movement.

18. Saw blade grinding machine according to Claim 13, **characterised in that** the holding means (19) is a clamping means with a movable clamping cheek and a clamping cheek (21) fixedly disposed on the machine frame.

19. Saw blade grinding machine according to Claim 13, **characterised in that** the positioning means (25) has three linear adjusting directions (X, Y, Z), which are oriented at right angles to one another.

20. Saw blade grinding machine according to Claim 13, **characterised in that** the positioning means (25) has swivel axis (B), around which the grinding head (24) can be swivelled and which is oriented parallel to a rotational axis (5) of the saw blade holder (4).

21. Saw blade grinding machine according to Claim 13, **characterised in that** in order to perform a relative swivelling movement between grinding head (24) and tooth, the saw blade holder (4) is movable transversely to an imaginary connecting line between the grinding head and a rotational axis (5) of the saw blade holder (4).

## Revendications

1. Tête de meulage (24) pour une meuleuse, comportant
un support-palier (34) sur lequel est monté tournant un premier arbre (33), qui est lié en entraînement à un premier dispositif d'entraînement et porte à une extrémité au moins une meule disque (26a), un deuxième arbre (38) étant prévu sur la tête de meulage (24), lequel arbre est lié en entraînement à un deuxième dispositif d'entraînement et porte à une extrémité un outil de meulage (27),
le deuxième arbre (38) étant disposé dans une zone entre les extrémités du premier arbre (33),
**caractérisée par le fait**
**que** le deuxième dispositif d'entraînement est un entraînement à haute vitesse, dont la vitesse de rotation est au moins dix fois supérieure à la vitesse du dispositif d'entraînement du premier arbre (33) et
**que** l'outil de meulage prévu sur le deuxième arbre (38) est conformé en meule sur tige (27), dont le diamètre est diffèrent de plus d'un ordre de grandeur du diamètre de la meule disque (26a).

2. Tête de meulage selon la revendication 1, **caractérisée par le fait que** les arbres (33, 38) sur la tête de meulage (24) sont supportés dans une position récipoque relative fixe dans l'espace.

3. Tête de meulage selon la revendication 1, **caractérisée par le fait que** les arbres (33, 38) prévus sur la tête de meulage (24) sont supportés dans le support-palier (34) de manière non-réglable l'un par rapport à l'autre.

4. Tête de meulage selon la revendication 1, **caractérisée par le fait que** le dispositif d'entraînement pour le premier arbre (33) et le dispositif d'entraînement à haute vitesse entraînent chacun séparément le premier arbre (33) et le deuxième arbre (38).

5. Tête de meulage selon la revendication 1, **caractérisée par le fait que** le premier arbre (33) et le deuxième arbre (38) sont disposés perpendiculairement l'un à l'autre en étant mutuellement sécants ou décalés l'un par rapport à l'autre.

6. Tête de meulage selon la revendication 1, **caractérisée par le fait que** le premier arbre (33), à ses deux extrémités, porte chaque fois au moins un outil de meulage (26a, 26b) et que le deuxième arbre (38) et son entraînement (43) sont disposés à l'extérieur de la zone comprise entre les outils de meulage (26a, 26b).

7. Tête de meulage selon la revendication 6, **caractérisée par le fait qu'**au moins une des meules-disques (26a, 26b), au moins sur sa surface périphérique, est pourvue de matériau abrasif.

8. Tête de meulage selon la revendication 6, **caractérisée par le fait qu'**au moins une des meules-disques (26, 26b), au moins sur l'une de ses faces planes, est pourvue de matériau abrasif.

9. Tête de meulage selon la revendication 6, **caractérisée par le fait qu'**au moins une des meules-disques (26, 26b) est agencée pour usiner la face en dépouille (28) de la dent.

10. Tête de meulage selon la revendication 1, **caractérisée par le fait que** la meule sur tige (27) est agencée pour usiner la face d'attaque (31) de la dent pour réaliser un meulage en creux.

11. Tête de meulage selon la revendication 1, **caractérisée par le fait que** la meule sur tige (27) est de forme tronconique ou cylindrique et que son demi-rayon, de préférence, est inférieur à l'épaisseur d'une dent (29) de la lame de scie (3) mesurée dans la direction axiale.

12. Machine à affûter les lames de scies, en particulier pour lames de scie circulaires (3), comportant une tête de meulage selon une des revendications 1 à 11.

13. Machine à affûter les lames de scies selon la revendication 12, **caractérisée par le fait qu'**elle comporte en outre :
un bâti de machine (2) agencé de manière à pouvoir être posé sur une surface de support,
un support de lame de scie (4) porté par le bâti de machine (2), qui comporte un dispositif de positionnement (6) pour le montage de la lame de scie (3) dans une position prédéterminée ainsi qu'un moyen d e fixation (8) de la lame de scie (3),
un dispositif d'avance (15) agencé p our amener la lame de scie ( 3) dent à dent dans la position d'usinage et est supporté par le bâti de machine (2),
un dispositif de fixation (19) supporté par le bâti de machine (2) pour maintenir la lame de scie (3) immobile en position de d'usinage,
un dispositif de positionnement (25) porté par le bâti de machine (2), qui présente au moins deux directions de déplacement linéaire (X, Z) et porte la tête de meulage (24),
un dispositif de commande (11) qui commande aussi bien le dispositif de positionnement (25) que le dispositif d'avance (15), le dispositif de fixation (19) et le dispositif d'entraînement.

14. Machine à affûter les lames de scies selon la revendication 13, **caractérisée par le fait que** le support de lame de scie (4) est monté sur le bâti de machine (2) avec possibilité de déplacement transversalement (10) à son axe rotation (5).

15. Machine à affûter les lames de scies selon la revendication 13, **caractérisée par le fait que** pour le déplacement du support de lame de scie (4), une direction de déplacement (10) est prédéterminée sur la tête de meulage (24) pour le déplacement en direction de la tête de meulage (24) et dans la direction opposée à celle-ci.

16. Machine à affûter les lames de scies selon la revendication 13, **caractérisée par le fait qu'**il est prévu pour le déplacement du support de lame de scie (4) un mécanisme de déplacement qui est contrôlé par le dispositif de commande (11).

17. Machine à affûter les lames de scies selon la revendication 13, **caractérisée par le fait que** le dispositif de fixation (19), sous le contrôle du dispositif de commande, peut être amené d'un état actif dans état passif, la lame de scie (3) étant tenue immobile sans possibilité de rotation dans l'état actif et étant libre, donc pouvant tourner, dans l'état passif.

18. Machine à affûter les lames de scies selon la revendication 13, **caractérisée par le fait que** le dispositif de fixation (19) est un dispositif de serrage avec des mors de serrage (21) respectivement mobile et fixe montés sur le bâti de machine.

19. Machine à affûter les lames de scies selon la revendication 13, **caractérisée par le fait que** le dispositif de positionnement (25) présente trois directions de déplacement (X, Y, Z) qui sont mutuellement perpendiculaires.

20. Machine à affûter les lames de scies selon la revendication 13, **caractérisée par le fait que** le dispositif de positionnement (25) présente un axe de pivotement (B) autour duquel la tête de meulage (24) peut pivoter et qui est parallèle à un axe de rotation (5) du support de lame de scie (4).

21. Machine à affûter les lames de scies selon la revendication 13, **caractérisée par le fait que** le support de lame de scie (4) pour réaliser un pivotement relatif entre la tête de meulage (24) et la dent peut être déplacé transversalement à une droite imaginaire reliant la tête de meulage et un axe de rotation (5) du support de lame de scie (4).
